(19) Europäisches Patentamt
European Patent Office
Office européen des brevets

(11) Publication number: **0 046 558**
**B1**

(12) # EUROPEAN PATENT SPECIFICATION

(45) Date of publication of patent specification: **04.04.84**

(51) Int. Cl.³: **C 08 L 69/00**

(21) Application number: **81106375.9**

(22) Date of filing: **17.08.81**

(54) **Flame retardant alkylated aromatic polycarbonate compositions.**

(30) Priority: **27.08.80 US 181915**

(43) Date of publication of application:
**03.03.82 Bulletin 82/9**

(45) Publication of the grant of the patent:
**04.04.84 Bulletin 84/14**

(84) Designated Contracting States:
**DE FR GB IT NL**

(56) References cited:
**DE - A - 2 750 064**
**FR - A - 2 202 119**
**US - A - 3 023 101**

(73) Proprietor: **Mobay Chemical Corporation**
**Penn Lincoln Parkway West**
**Pittsburgh, Pennsylvania 15205 (US)**

(72) Inventor: **Krishnan, Sivaram**
**Sachsenstrasse 12**
**D-4130 Moers (DE)**

(74) Representative: **Gremm, Joachim, Dr. et al,**
**Bayer AG c/o Zentralbereich Patente, Marken und Lizenzen**
**D-5090 Leverkusen 1, Bayerwerk (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 046 558 B1

Flame Retardant Alkylated Aromatic Polycarbonate Compositions

The invention is directed to alkylated aromatic polycarbonate compositions and in particular to flame resistant alkylated aromatic polycarbonate blends and to a process for their preparation.

DE—OS (German Published Specification Nos.) 2,063,050 and 2,063,052 describe polycarbonates based on bis-(3,5-dimethyl-4-hydroxyphenyl)-methane, 2,2-bis-(3,5-dimethyl-4-hydroxyphenyl)-propane and $\alpha,\alpha'$-bis-(3,5-dimethyl-4-hydroxyphenyl)-p-isopropyl-benzene. In contrast to the previously known polycarbonates, for example those based on 2,2-bis-(4-hydroxyphenyl)-propane (bisphenol A, BPA), these polycarbonates are highly resistant to saponification i.e. resistant to hot aqueous alkali and to hot aqueous mineral acid.

Furthermore, they have glass transition temperatures of about 200°C which lie substantially above that of BPA-polycarbonate of 150°C. Hence they can be employed in many fields in which previously known polycarbonates such as BPA polycarbonate, could not be used. However, it has been found some of the properties of the new polycarbonates are not yet satisfactory.

Thus, the impact strength of the new polycarbonates still leaves something to be desired. Furthermore, the melt viscosity is relatively high which is a disadvantage for thermoplastic processing. Additionally, these alkylated polycarbonates such as described in US 3,879,348 exhibits poor fire resistance especially at low wall thickness, hence the flame resistance property is not as good as that of BPA polycarbonate.

*Summary of the Invention*

It has now been found, that the poor flame resistance property of polycarbonates consisting of structural units of formula (I)

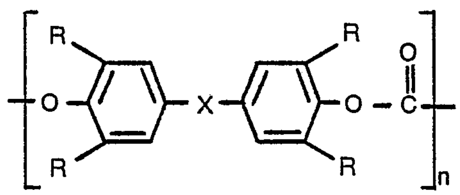

(I)

wherein x = $-CH_2-$, 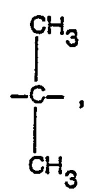 , 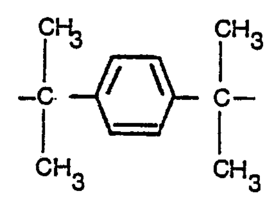 or 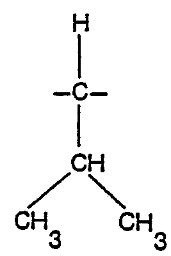

wherein R = $CH_3$, $C_2H_5$ or $C_3H_7$ and n is at least 15, preferably 20 to 400 and especially 25 to 300, may be improved substantially by mixing these polycarbonates with halogenfree copolycarbonates (II) from bis-(4-hydroxyphenyl)-sulfide or from bis-(4-hydroxyphenyl)-sulfoxide or from bis-(4-hydroxyphenyl)-sulfone with other diphenols of formula (III)

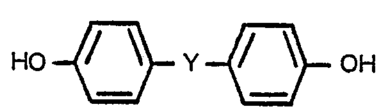

(III)

wherein y is $C_1$—$C_5$ alkylene or $C_2$—$C_5$ alkylidene or a single bond or —CO— and whereby the diphenol of formula (III) is 97—40 mol-%, preferably 95—70 mol-%, based on the total amount of bisphenol of formula (III) and bis-(4-hydroxyphenyl)-sulfide or based on the diphenol of formula (III) and bis-(4-hydroxyphenyl)-sulfoxide or based on the diphenol of formula (III) and bis-(4-hydroxyphenyl)-sulfone, reacted into the polycarbonate backbone, so that the sulfur content of the final blend of (A) and (B) lies in between 0,1 and 5 weight percent, preferably between 0,25 and 5 weight percent.

In formula (I), the substituent R is preferably methyl and X is preferably isopropylidene, methylene or isobutylidene.

The molecular weight $\overline{M}_w$ ($\overline{M}_w$ = weight average molecular weight measured by light scattering)

of (II) from bis-(4-hydroxyphenyl)-sulfide or from bis-(4-hydroxyphenyl)-sulfoxide or from bis-(4-hydroxyphenyl-sulfone with other diphenols as given in formula (III) lies between 15,000 to 200,000, preferably 20,000 to 80,000.

Component (A) and (B) in these blends should lie between 97—20% by weight for (A) and 3—80% by weight for (B), preferably between 85—45% by weight for (A) and 15—55% by weight for (B) and the component (B) is chosen so that the sulfur content of the blends of A and B in this invention lies between 0.1—5 weight percent based on the total weight of A and B, preferably 0,25—5% by weight, based on the total weight of (A) and (B).

*Detailed Description*

As stated previously, the present invention includes mixtures of 50 to 75 parts by weight of polycarbonate based on bis-(3,5-dimethyl-4-hydroxyphenyl)-methane, 2,2-bis-(3,5-dimethyl-4-hydroxyphenyl)-propane and $\alpha,\alpha'$-bis-(3,5-dimethyl-4-hydroxyphenyl)-p-isopropyl benzene with 50 to 25 parts by weight of Bisphenol-A-copolycarbonate (II) where the comonomer is either bis-(4-hydroxyphenyl)-sulfide (thiodiphenol) or bis-(4-hydroxyphenyl)-sulfoxide or bis-(4-hydroxyphenyl)-sulfone (sulfonyl diphenol). As will be seen from the examples polycarbonates having especially better flame resistant properties are obtained from 50 parts by weight of the tetramethyl-substitued bisphenol-A polycarbonates (I) with 50 parts by weight of Bisphenol-A-copolycarbonates (II).

Mixtures of polycarbonates based on bis-(4-hydroxyphenyl)-propane and polycarbonates based on bis-(4-hydroxyphenyl)-sulfide respectively -sulfone are known. (U.S. Patent 3,023,101, column 8, line 53ff). No mention is made of tetramethylbisphenol polycarbonate.

U.S. patent 3,398,212 describes also mixtures of polycarbonates containing bis-(4-hydroxyphenyl)-sulfide and other polycarbonates (column 1, line 68 and column 8, line 65). These copolycarbonates based on bis-(4-hydroxyphenyl)-sulfide contain at least 10 mol%- polycyclic geminal diphenols.

From Japanese Publication No. 67 850/75 it is known that thermoplastics e.g. polycarbonate can be made flame resistant with 1 to 50 weight percent of oligomeric tetrachloro or tetrabromothiodiphenolcarbonates with polymerization degree from 2 to 10.

From U.S. Patent 4,174,359 (Mo—1768) the polymer blends from copolycarbonates containing thiodiphenol and halogen containing polycarbonates are known. Mixing partners tetraalkylated bisphenols in particular tetramethylbisphenol A as bisphenol component is mentioned.

From U.S. Patent 3,890,266 (Le A 14 668) polymer blends from general tetramethylbisphenol polycarbonate with BPA homopolycarbonate or special Bisphenol-A-tetrahalobisphenol-A polycarbonate are mentioned.

The use of oligomeric carbonates (with polymerization degree 2 to 10) from tetrachloro or tetrabromo sulfone bisphenols as flame retarding additives in 1 to 50 weight percent based on thermoplastics to impart flame retardancy is also cited in Japanese Publication 67850/75; polycarbonate is one type of plastics mentioned in this publication.

In U.S. Patent 4,174,359 the use of sulfone bisphenol as comonomer for the preparation of the thiodiphenol-copolycarbonates respectively the halogenated copolycarbonates is mentioned.

The polycarbonate resins of formula (I) above, their properties and method of preparation have been described in U.S. patent 3,879,348. Briefly, they are obtainable by a reaction of the corresponding alkylated bisphenols with phosgene or with the bischlorocarbonic acid esters of the alkylated bisphenols in accordance with the phase boundary polycondensation process.

According to the phase boundary polycondensation process, polycarbonate resins are prepared by reacting aromatic dihydroxy compounds with an alkali metal hydroxide or with an alkaline earth metal oxide or hydroxide to form a salt. The salt mixture, in an aqueous solution or suspension is reacted with phosgene, carbonyl bromide, or bischloroformic esters of the aromatic dihydroxy compounds. An organic solvent is provided in the reaction admixture which is a solvent for the polymer but not for the aromatic dihydroxy salts. Chlorinated aliphatic or aromatic hydrocarbons are preferably used as the organic solvents which dissolve the condensation product. Suitable solvents include especially methylene chloride and chlorobenzene.

Monofunctional reactants such as monophenols may be used in order to limit the molecular weight. The alkylated polycarbonates can be branched by the incorporation of small amounts, preferably of between about 0,05 and 2,0 mol-% (relative to diphenols employed), of trifunctional or more than trifunctional compounds, especially compounds with three or more phenolic hydroxyl groups.

Polycarbonates of this type are described, for example, in German Offenlegungsschriften (German Published Specifications) 1,570,533; 1,595,762; 2,116,974 and 2,113,347, British Patent Specification 1,079,821 and U.S. Patent Specification No. 3,544,514.

Some examples of compounds with three or more than three phenolic hydroxyl groups which can be used are phloroglucinol, 4,6-dimethyl-2,4,6-tri-(4-hydroxyphenyl)-heptane, 2,4,6-trimethyl-2,4,6-tri-(4-hydroxyphenyl)-heptane, 1,4,5-tri-(4-hydroxyphenyl)-benzene, 1,1,1-tri-(4-hydroxyphenyl)-ethane, tri-(4-hydroxyphenyl)phenylmethane, 2,2-bis-(4,4-bis-(4-hydroxyphenyl)cyclohexyl)-propane, 2,4-bis-(4-hydroxyphenylisopropyl)-phenol, 2,6-bis-(2-hydroxy-5'-methylbenzyl)-4-methylphenol, 2-(4-hydroxyphenyl)-2-(2,4-dihydroxyphenyl)-propane, hexa-(4-(4-hydroxyphenylisopropyl)-phenyl)-orthoterephthalic acid ester, tetra-(4-hydroxyphenyl)-methane, tetra-(4-(4-hydroxyphenylisopropyl)-phenoxy)-methane and 1,4-bis-(4',4''-dihydroxytriphenyl)-methyl)-benzene. Some of the other trifunctional compounds are 2,4-dihydroxy-benzoic acid, trimesic acid, cyanuric chloride and 3,3-bis-(4-hydroxyphenyl)-2-oxo-2,3-dihydroindole.

In order to accelerate the reaction, catalysts such as tertiary amines, quaternary ammonium, phosphonium or arsonium salts and the like may be used. The reaction temperature should be about −20°C to +150°C, preferably about 0°C to 100°C.

The following list exemplifies suitable bisphenols for the manufacture of the polycarbonate resin of formula (I):

Bis-(3,5-dimethyl-4-hydroxyphenyl)-methane,
bis-(3,5-diisopropyl-4-hydroxyphenyl)-methane,
2,2-bis-(3-methyl-5-isopropyl-4-hydroxyphenyl)-propane,
$\alpha,\alpha'$-bis-(3,5-dimethyl-4-hydroxyphenyl)-p-diisopropyl benzene,
2,2-bis-(3,5-dimethyl-4-hydroxyphenyl)-propane and
2,2-bis-(3,5-diethyl-4-hydroxyphenyl)-propane.

Alkylated polycarbonates of formula (I) are characterized by their structural stability at high temperatures as measured by heat distortion temperature, which is higher than their non-alkylated counterparts as well as by their relatively poor flame resistance.

Halogen free copolycarbonates (II) above are obtainable by any of the processes known for the preparation of polycarbonates. Some of these porcesses are disclosed in German Patent Nos. 962,274 and 1,046,311; and U.S. Patent Nos. 2,970,131; 2,991,273; 2,999,835; 2,999,846 and 3,028,365. The preferred process is the interfacial polycondensation process described above.

Among the sulfur-free conventionally used diphenols (III) are: dihydroxydiphenyls, bis-(hydroxyphenyl)-alkanes, and bis-(hydroxyphenyl)-ketones. These and further suitable aromatic dihydroxy compounds are described, for example, in U.S. Patent No. 3,028,365 and in the monograph, H. Schnell, "Chemistry and Physics of Polycarbonates", Interscience Publishers, New York, 1964.

The copolycarbonates described from the diphenols (III) providing the sulfur source for the novel blend of the invention may be branched by the incorporation of small amounts, preferably between 0,05 and 2,0 mol percent (relative to the total amount of diphenols) of trifunctional compounds or compounds whose functionality is greater than two, especially compounds having three or more phenolic hydroxy groups, as described before for the alkylated aromatic polycarbonates.

Monofunctional compounds, such as monophenols may be incorporated in small amounts in order to limit the molecular weight and to prevent cross-linking of the copolycarbonates (II).

*The Blend*

Alkylated polycarbonates and sulfur-bearing copolycarbonates are, in accordance with the practice of the invention, intimately blended in any of the known, suitable means for mixing such as kneaders, single or twin screw extruders, mills and the like. However, they can also be manufactured by mixing the appropriate polycarbonates in solution, for example in methylene chloride and subsequently evaporating off the solvent. While with the second kind of mixing complete homogeneity is achieved in every case, it is necessary in the case of former type of mixing, to ensure that the extruder produces a sufficient mixing action to achieve the completely homogeneous mixing of the polycarbonates, the polycarbonate blend of the invention may be prepared so as to contain between 0,1 and 5, and preferably between 0,25 and 5 percent by weight, of sulfur. The preferred embodiments comprise blends of tetramethylated polycarbonates and effective amounts of either 4,4'-thiodiphenol or sulfonyl diphenol based copolycarbonates.

Surprisingly, the polycarbonate blends of the invention exhibit flame resistance levels which are superior to that of sulfur-bearing bisphenol A based copolycarbonates.

The blends of the invention may contain additives such as glass fibers, pigments, dyes, UV stabilisers, mold release agents and fillers.

The invention shows surprisingly that substantially small amounts of sulfur derived from the copolycarbonate suffice in order to achieve a certain fire resistance for example class SE—O according to UL-Subject 94 at 3.2 mm thickness. Here one is dealing with a synergistic effect. The observed flame retardant property improvement is very significant when one considers that polycarbonate from tetramethylbisphenol A exhibits poorer flame retardant property (fails UL-subject 94 test V—2 rating (see Table II) compared to polycarbonate from Bisphenol A which passes UL-subject 94 test V—2 rating (see Table II). Moreover, the blends of Bisphenol A polycarbonate and copolycarbonate containing bis-(4-hydroxyphenyl)-sulfide or bis-(4-hydroxyphenyl)-sulfone do not exhibit any improvement in flame retardant property over Bisphenol A polycarbonate. Thus, in this invention one may be dealing with a synergistic effect.

The invention is demonstrated by the examples.

Examples 1 to 6

Prepartion of an aromatic, sulfur containing copolycarbonate.

Aromatic copolycarbonates of 4,4′-thiodiphenol were prepared by the phosgenation of mixtures of disodium salts of 2,2′-bis-(4-hydroxyphenyl)-propane (BPA) and 4,4′-thiodiphenol (TDP). Table I lists the various mixtures used and the melt indices of their corresponding copolycarbonates — measured according to ASTM D—1238 condition 0.

TABLE I

| Example | BPA/TDP Mol-% | Melt Index GMS/Min. | $M_{LS}$ |
|---|---|---|---|
| 1 | 95/5 | 2.5 | $3.7 \times 10^4$ |
| 2 | 90/10 | 4.8 | $3.2 \times 10^4$ |
| 3 | 85/15 | 3.5 | $3.6 \times 10^4$ |
| 4 | 75/25 | 8.5 | $3.0 \times 10^4$ |
| 5 | 70/30 | 6.6 | $3.1 \times 10^4$ |
| 6 | 85/15 | 13.0 | $2.7 \times 10^4$ |
| (aa) | 100/0 | 3.5 | $3.4 \times 10^4$ |
| (a) | Tetramethylbisphenol-A Homopolycarbonate | — | $2.6 \times 10^4$ |
| (aaa) | Tetramethylbisphenol-A/TDP Copolycarbonate 90/10 | — | $2.7 \times 10^4$ |

Examples 7 to 12

Copolycarbonates of TDP prepared as described in examples 1 through 6 above were blended with polycarbonate (a) in 50/50 weight percent ratios. The polyblends were evaluated in terms of their mechanical properties and flame resistance and the results are presented in Table II.

TABLE II

| Example | Control (a) | Control (aa) | Comparison (aaa) | Comparison (2) | Comparison (aa) + 2) (50%) (50%) | 7 | 8 | 9 | 10 | 11 | 12 |
|---|---|---|---|---|---|---|---|---|---|---|---|
| % sulfur | 0 | 0 | 1.0 | 1.2 | 0.6 | 0.365 | 0.73 | 1.09 | 1.82 | 2.19 | 1.09 |
| % TDP in the blend | 0 | 0 | 7.2 | 8.6 | 5.0 | 2.5 | 5.0 | 7.5 | 12.5 | 15.0 | 7.5 |
| Melt index of the blend (g/10 min) | 1.8 | 3.5 | 4.0 | 4.0 | 3.8 | 2.8 | 3.4 | 3.3 | 4.9 | 4.4 | 4.6 |
| Izod Impact Strength (J/m) | | | | | | | | | | | |
| Notched Izod | | | | | | | | | | | |
| 3.16 mm | 24 | 8.01 | 26.7 | 8.01 | 8.01 | 43.3 | 41.7 | 47.0 | 39.6 | 47.6 | 41.7 |
| 6.35 mm | 23.5 | 107 | 24 | | 107 | 42.2 | 39.6 | 42.7 | 39.0 | 40.7 | 38.6 |
| Critical thickness (mm) | 2.54 | 5.33 | 2.54 | 6.22 | 4.57 | 2.54 | 2.54 | 2.54 | 2.54 | 2.54 | 2.54 |
| Burning characteristics (UL—94) 1.58 mm | — | V—2 | V—2 | V—2 | 40% V—1<br>60%—V—2 | 20% V—0<br>60% V—1<br>20% V—2 | 40% V—1<br>60% V—2 | 60% V—0<br>40% V—1 | 80% V—0<br>20% V—1 | 40% V—0<br>60% V—1 | 60% V—1<br>40% V—1 |
| 3.16 mm class | Fails V—2; | V—2 | V—2 | V—2 | V—2 | V—0 | V—0 | V—0 | V—0 | V—0 | V—0 |
| Ave. burn time (sec) | — | — | — | — | — | 1.4 | 3.5 | 2.3 | 1.2 | 3.3 | 1.3 |

(x) measured by ASTM—D 1238 condition 0

Examples 13 through 17

Copolycarbonates based on sulfonyl diphenol (SDP) have been prepared in accordance with the interfacial polycondensation synthesis discussed above. These were blended with polycarbonate (a) to yield compositions of differing sulfur contents. The blends were evaluated in terms of their melt indices, impact properties and flame resistance and the findings are reported in Table III.

(b) = 95 mol-% bisphenol A/5 mol-% sulfonediphenol = copolycarbonate, Melt Index 6,0, $M_{LS}$ $3.2 \times 10^4$

(bb) = 90 mol-% bisphenol A/10 mol-% sulfonediphenol = copolycaronbate, Melt Index 5,4, $M_{LS}$ $3.1 \times 10^4$

(c) = Mixture of polycarbonate (aa) (50% by weight) and copolycarbonate (bb) (50% by weight)

(d) = 90 mol-% tetramethylbisphenol A/10 mol-% sulfonediphenolcopolycarbonate, Melt Index 2.5, $M_{LS}$ $2.7 \times 10^4$

13 = 25% by weight (a) and 75% by weight (bb),
14 = 50% by weight (a) and 75% by weight (bb),
15 = 75% by weight (a) and 25% by weight (bb),
16 = 50% by weight (a) and 50% by weight (b),
17 = 25% by weight (a) and 75% by weight (bb,
having Melt Index 6.0, instead of 5.4).

TABLE III

| Example | (13) | 14 | 15 | 16 | 17 | Control (b) | Control (bb) | Control (c) | Control (d) |
|---|---|---|---|---|---|---|---|---|---|
| % Sulfur | 0.96 | 0.64 | 0.32 | 0.34 | 0.96 | 0.69 | 1.28 | 0.64 | 1.2 |
| Melt flow* rate (g/min) | 4.6 | 3.9 | 3.6 | 3.0 | 4.9 | 6.0 | 5.4 | 3.5 | 2.1 |
| Impact Strength (J/m) | | | | | | | | | |
| notched izod | | | | | | | | | |
| 3.16 mm | 68.5 | 36.4 | 27.8 | 33.7 | 39 | 811 | 751 | 801 | — |
| 6.35 mm | 60.5 | 40.7 | 20.9 | 39 | 39.6 | 165 | 171 | 107 | — |
| Critical thickness (mm) | 2.54 | 2.54 | 2.54 | 2.54 | 2.54 | 5.65 | 5.5 | 5.33 | — |
| Heat deflection temperature, 1.81 MPa, °C | 150.1 | 157.8 | 164.3 | 157.8 | 157.8 | 137.9 | 136.1 | 130 | — |
| Burning characteristics UL-94 3.16 mm class | V—0 | V—0 | V—0 | V—0 | V—0 | V—2 | V—2 | V—2 | V—2 |
| Ave. burn time (sec.) | | 1.2 | 4.2 | 0.8 | 1.6 | — | — | — | — |
| 1.58 mm class | fails V—2; | V—2 | V—2 | V—2 | V—2 | — | — | — | — |

* measured by ASTM—D 1238, condition 0

**Claims**

1. Mixtures of

A) 97—20% by weight of polycarbonates consisting of structural units of formula (I)

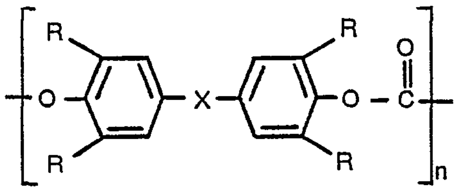

(I)

wherein R is $CH_3$, $C_2H_5$ or $C_3H_7$ and wherein x is

$-CH_2-$, 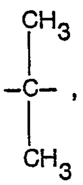 , 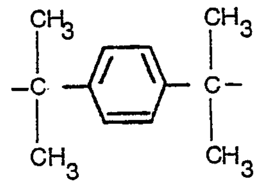 or 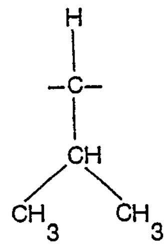

and n is at least 15 and

B) 3—80% by weight of halogenfree copolycarbonates (II) from bis-(4-hydroxyphenyl)-sulfide, bis-(4-hydroxyphenyl)-sulfoxide or from bis-(4-hdyroxyphenyl)-sulfone with other diphenols of structural formula (III)

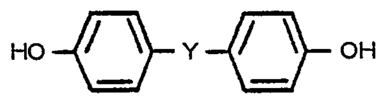

(III)

wherein Y is $C_1$—$C_5$-alkylene, $C_2$—$C_5$-alkylidene or a single bond or —CO—, having molecular weights $\overline{M}W$ between 15000 and 200 000, and wherein the amount of diphenol of formula (III) is 97 to 40 mol% of the total amount of diphenols of formula (III) and the sulfur containing diphenols incorporated into the copolycarbonate (II), so that the sulfur content of the final blend of A) and B) lies between 0.,1 and 5 weight percent, based on the total weight of A) + B).

2. Mixtures according to Claim 1, of

A) 85—45% by weight of polycarbonate (I) and

B) 15—55% by weight of copolycarbonate (II).

3. Mixtures according to claims 1 and 2, wherein the amount of diphenol of formula (III) is 95 to 70 mol% of the total amount of diphenols of formula (III) and the sulfur-containing diphenols incorporated into the copolycarbonate (II).

4. Mixtures according to claims 1 to 3, wherein the sulfur content in the final blend of A) and B) lies between 0.25 and 5 weight percent, based on the total weight of A) + B).

**Revendications**

1. Mélanges de:

A) 97—20% en poids de polycarbonates consistant en motifs de structure de formule

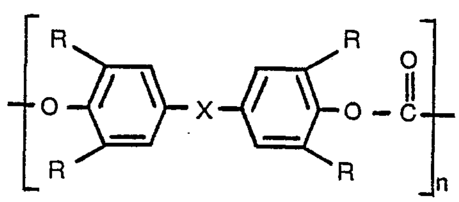

(I)

dans laquelle R est $CH_3$, $C_2H_5$ ou $C_3H_7$ et X est

$-CH_2-$, 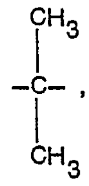, 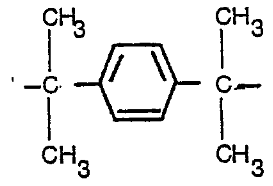 ou 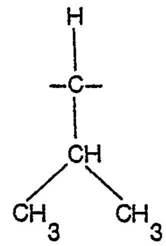

et n est au moins égal à 15 et

B) 3—80% en poids de copolycarbonates non halogénés (II) dérivés du sulfure de bis-(4-hydroxyphényle) ou du bis-(4-hydroxyphényl)-sulfoxyde ou de la bis-(4-hydroxyphényl)-sulfone avec d'autres diphénols de formule (III)

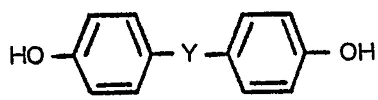
(III)

où Y est un alkylène en $C_1C_5$ ou un alkylidène en $C_2$—$C_5$, une liaison simple ou un groupe —CO—, ayant des poids moléculaires $\overline{M}_w$ compris entre 15 000 et 200 000, et où la quantité de diphénol de formule (III) est de 97 à 40 moles% de la quantité totale de diphénols de formule (III) et des diphénols soufrés incorporés dans le copolycarbonate (II), de sorte que la teneur en soufre du mélange final de A) et B) est comprise entre 0,1 et 5% en poids, par rapport au poids total de A) + B).

2. Mélanges selon la revendication 1 de

A) 85—45% en poids de polycarbonate (I) et

B) 15—55% en poids de copolycarbonate (II).

3. Mélanges selon les revendications 1 et 2, dans lesquels la quantité de diphénol de formule (III) est de 95 à 70 moles% de la quantité totale de diphénols de formule (III) et des diphénols soufrés incorporés dans le copolycarbonate (II).

4. Mélanges selon les revendications 1 à 3, dans lesquels la teneur en soufre dans la mélange final de A) et B) est comprise entre 0,25 et 5% en poids par rapport au poids total de A) + B).

**Patentansprüche**

1. Gemische aus

A) 97 bis 20 Gew.-% Polycarbonaten bestehend aus Struktureinheiten der Formel (I)

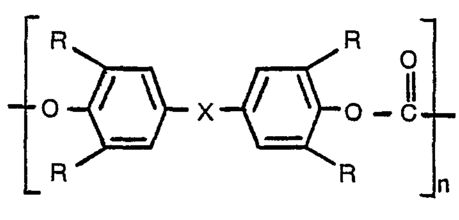
(I)

in der R $CH_3$, $C_2H_5$ oder $C_3H_7$ ist und worin X

$-CH_2-$, 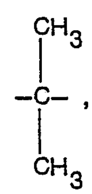, 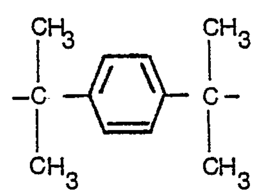 oder 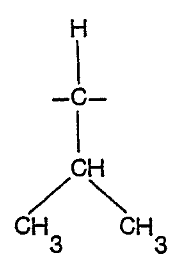

ist und n wenigstens 15 ist, und

B) 3 bis 80 Gew.-% halogenfreier Copolycarbonate (II) aus Bis-(4-hydroxyphenyl)sulfid, Bis-(4-hydroxyphenyl)sulfoxid oder aus Bis-(4-hydroxyphenyl)-sulfon mit anderen Diphenolen der Strukturformel (III)

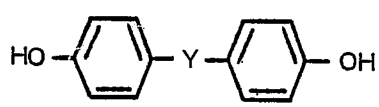
(III)

in der Y $C_1$- bis $C_5$-Alkylen, $C_2$- bis $C_5$-Alkyliden oder eine Einfachbindung oder —CO— ist, mit Molekulargewichten $\bar{M}W$ zwischen 15 000 und 200 000, und worin die Menge des Diphenols der Formel (III) 97 bis 40 Mol-% der Gesamtmenge der in das Copolycarbonat der Formel (II) eingearbeiteten Diphenole der Formel (III) und der schwefelhaltigen Diphenole beträgt, so daß der Schwefel-Gehalt des das Endprodukt bildenden Gemischs aus A) und B) zwischen 0,1 und 5 Gew.-%, bezogen auf das Gesamtgewicht von A) + B), liegt.

2. Gemische nach Anspruch 1 aus
A) 85—45 Gew.-% des Polycarbonats (I) und
B) 15-55 Gew.-% des Copolycarbonats (II).

3. Gemische nach den Ansprüchen 1 und 2, dadurch gekennzeichnet, daß die Menge des Diphenols der Formel (III) 95 bis 70 Mol-% der Gesamtmenge der in das Copolycarbonat der Formel (II) eingearbeiteten Diphenole der Formel (III) und der schwefelhaltigen Diphenole beträgt.

4. Gemische nach den Ansprüchen 1 bis 3, dadurch gekennzeichnet, daß der Schwefel-Gehalt des das Endprodukt bildenden Gemischs aus A) und B) zwischen 0,25 und 5 Gew.-%, bezogen auf das Gesamtgewicht von A) + B), liegt.